(19) Europäisches Patentamt
European Patent Office
Office européen des brevets

(11) EP 2 818 283 A1

(12) **EUROPEAN PATENT APPLICATION**

(43) Date of publication:
**31.12.2014 Bulletin 2015/01**

(51) Int Cl.:
***B25J 9/16*** *(2006.01)*

(21) Application number: **13174373.4**

(22) Date of filing: **28.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Robotkonsult AB**
**436 32 Askim (SE)**

(72) Inventor: **Stenberg, Björn**
**436 32 Askim (SE)**

(74) Representative: **Edlund, Fabian**
**Awapatent AB**
**P.O. Box 11 394**
**404 28 Göteborg (SE)**

(54) **Method for robot calibration**

(57) A method for calibration of a robot (1) in relation to a robot installation with at least one work object (6), the method comprising modeling the robot installation in a nominal model (7), defining a plurality of desired positions (P) as nominal coordinates ($x_{nom}$), converting the nominal coordinates to robot coordinates ($x_{rob}$), operating the robot to reach a series of robot positions defined by the robot coordinates, and, when required, manually moving the robot from one of the robot positions to a corresponding desired position (touch-up). The manual movement (touch-up) is stored in the form of an addition to the nominal model, wherein the addition includes corrections ($x_{corr}$) of the nominal coordinates.

According to the invention, the information from each touch-up is stored in addition to the nominal model. Thereby, the original model is maintained, and can still be used as "blue print".

x_rob´
x_rob
12
x_nom´
x_nom

Fig. 2

EP 2 818 283 A1

## Description

Field of the invention

The present invention relates to a method for calibration of a robot in relation to a robot installation with at least one work object.

Background of the invention

In off-line programming, robot programs are created without direct access to the installation. Instead, knowledge about the installation, such as a CAD model or measurements of the work object, is used. The position of the robot in relation to the work object is further described by a set of parameters, normally including a transform (W) between the robot base and the coordinate system of the object, and a transform (T) between the tool plate and the tool. These transforms are used to move the tool to positions given in a nominal coordinate system. A program based on a model in the nominal coordinate system (a nominal model) can thus be transformed to enable the robot to perform the desired motion.

When the robot, despite correct nominal programming, is misaligned with a desired position, the robot's perception of the position is different from the actual position. This error can be due to inaccurate transforms (W and/or T), or due to differences between reality and the nominal model. There can also be irregularities in the robot design.

Normally, W and T are calibrated one at a time, in two separate calibrations. There are however a known procedures, where only one calibration is performed. According to such procedure, repeated "touch-ups" are performed, i.e. the tool of the robot is moved from the programmed position to the correct position by an operator, and these corrections are processed by software to calibrate the installation. The correction is made by adjusting the nominal model, typically a CAD model or the like, by post processing. A drawback with this procedure is therefore that the information present in the detected error is lost. Expressed differently, if the robot is misaligned with its transform, this will be compensated by redrawing the CAD model. After that, the robot program must be reprogrammed, in accordance with the new object represented by the CAD model.

The discussed procedure may potentially lead to individual robot programs in each robot installation, even though they were intended to perform identical motion patterns according to the original model.

Further, known methods require a large flow of information between the CAD world and the robot world. An operator is often forced to wait while a model is updated, and new results are downloaded into the robot.

Another type of system is disclosed in US 4,763,276. Here, sensor information is used to detect errors in robot position, and robot parameters are corrected in order to avoid these errors. Such systems require complex installations with sensitive sensors, leading to high cost.

Objects of the invention

An object with the present invention is to mitigate the above problems, and provide a simple and inexpensive calibration of a robot installation.

A further object is to allow calibration of a robot installation without too extensive stops in production.

A further object is to avoid the need of reprogramming of the off-line program when the actual installation deviates from the nominal model.

A further object is to organize the information in a manner more closely resembling the real world, to thereby purify the flow of information between the virtual world and the robot world and avoid loss of information in the transform between the two worlds.

General disclosure of the invention

According to the present invention, these and other objects are achieved by a method for calibration of a robot in relation to a robot installation with at least one work object, the method comprising modeling the robot installation in a nominal model, comprising a description of the work object and a parameter set describing physical relationships in the robot and between the robot and the work object, defining a plurality of desired positions as nominal coordinates in the model, converting the nominal coordinates to robot coordinates, operating the robot to reach a series of robot positions defined by the robot coordinates, and, when required, manually moving the robot from one of the robot positions to a corresponding desired position (touch-up). The manual movement (touch-up) is stored in the form of an addition to the nominal model, wherein the addition includes corrections of the nominal coordinates.

In the following description, the word "position" is used to indicate a pose of the robot including location and orientation, i.e. with six degrees of freedom. However, it is noted that a "position" equally well may be simply a location (three coordinates) or have any other number of degrees of freedom.

According to the invention, a touch-up is performed in several positions. Instead of enabling reprogramming of the nominal model, and thereby of the off-line program, the information from each touch-up is stored in connection with the nominal model. Thereby, the original model is maintained, and can still be used as "blue print". By storing the error vector, the method ensures that the robot always moves correctly to a position for which the touch-up has been performed.

According to the invention, an automatic, continuous calibration can be performed directly on the floor by the operator, by a number of simple touch-ups. This leads to improved interactivity between the operator and the robot installation.

According to a preferred embodiment, the set of nominal parameters is adjusted after each touch-up, and in connection therewith the corrections of the given nominal coordinates are adjusted to the adjusted set of nominal parameters.

The method according to this embodiment is iterative, in the sense that every touch-up will enable an improved adjustment and a more correct set of parameters, and thus a more correct estimation of the next position. Thereby the required correction is minimized after each touch-up, as information from previously performed touch-ups is used. This is an important difference compared to prior art, where several touch-ups are performed before any reprogramming can be effected. An advantage with the iterative procedure is that every touch-up provides an immediate improvement, and the operator can thus decide himself the number of touch-up operations that is suitable. Note that the iterative qualities of the method do not apply to the touch up performed for a specific position. On the contrary, the method according to the invention ensures that more than one touch-up is never required for a specific position.

The adjustment of the set of parameters may be stored in the form of an addition to the nominal set of parameters, in the same way as corrections of coordinates are stored:

$$X' = X_{nom} + X_{corr}$$

$$\Pi' = \Pi_{nom} + \Pi_{corr}$$

The required correction of the robot's motion pattern is thus effected by calibration of the set of parameters (including e.g. the transforms W and T, but also any modeled play, etc.), without amending the off-line program.

In other words, the operation of the robot is adapted to reality, instead of reprogramming the nominal model. Simply put, while in prior art the drawing (the nominal model) is adjusted to fit the real world (the robot installation), according to the present invention it is specified how the robot's reality differs from the drawing.

As the nominal model remains intact, no reprogramming is required which saves additional time and computational power.

According to prior art, every touch-up is used only once to correct the nominal model and the robot program, and much of the information from the measurements is thus lost. The method according to this embodiment of the present invention, which intends to correct the relationship between the nominal model and robot, instead uses every touch-up to immediately determine relevant robot parameters, e.g. the transforms W and T.

The relationship between model and reality is thus improved for each touch-up, and in the ideal case, where the nominal model of the work object is accurate in every working position and the set of parameters is capable of modeling every movement of the robot, the remaining error will approach zero. Already three or four touch-ups will in most cases result in a significant improvement, but this of course depends on the choice of positions. In order to correct an error in a specific degree of freedom, this degree of freedom must be possible to determine by the positions for which a touch-up has been performed.

The adjustment of the relationship that takes place after each touch-up preferably includes a correlation in the least square sense of the corrections of the nominal coordinates. The correction vector thus functions as the error vector in a least square minimization. By weighting different components in this minimization, errors in significant directions may be given priority, so that these errors have greater impact.

The act of dividing the model in original nominal model and a correction as discussed above is very advantageous as it can be used continuously in a nominal model, such as a CAD system with a robot simulator. In the model world the corrections are ignored, and the program works just as when it was created. If a position is changed/moved in the nominal model, its associated coordinate is again given a "clean" value, i.e. any remaining error is erased. When reloading, this new position will still benefit from the corrected set of parameters, but not be subject to a remaining error which is related to one or several different positions. Alternatively, when appropriate relations are known, such a changed/moved position may be given a shifted/transformed value. The value should still be flagged as "not yet teached", telling the on-line iterative calibration process to not yet use this correction for input to parameter optimization. The same program can thus be used in operation at the same time as it is fully functional in the nominal model, without requiring that these two descriptions repeatedly must be updated with each other.

Brief description of the drawings

The present invention will be described in more detail with reference to the appended drawings, showing currently preferred embodiments of the invention.

Figure 1 schematically shows a robot installation in which the present invention may be implemented.
Figure 2 shows a touch-up of the robot in figure 1.
Figure 3 is a flow chart of a method according to an embodiment of the invention.

Detailed description of preferred embodiments

It is important for the present invention that the nominal model is regarded as correct, in the same way as a drawing is considered correct in a manufacturing process. The calibration discussed in the following is thus not intended to modify and update the nominal model, as normally done in similar situations. On the contrary, the intention is to maintain the nominal description, in order to facilitate future reuse. The method according to the invention aims to calculate a more correct set of parameters $\Pi$. Any remaining errors are also stored.

On a general level, the present invention can be described with the following set of vector equations. The vector X represents coordinates, where the index $_{rob}$ denotes robot program coordinates (i.e. where the robot is operated), the index $_{nom}$ denotes nominal coordinates, and index $_{corr}$ denotes corrections of the nominal model.

First, the vector $X_{rob}$ can be determined, as a function of the nominal coordinates $X_{nom}$, the nominal set of parameters $\Pi_{nom}$, and any stored corrections $X_{corr}$ (j) and $\Pi_{corr}$(j) after j touch-ups.

$$X_{rob}(j) = f(X_{nom}, X_{corr}(j), \Pi_{nom}, \Pi_{corr}(j)) \qquad (1)$$

Then yet another touch-up is performed, resulting in an extension $\Delta$ of the vector Xcorr. An error vector $\varepsilon$ is defined according to:

$$\varepsilon = g(X_{nom}, X_{corr}(j)+ \Delta, \Pi_{nom}, \Pi_{corr}(j)) \qquad (2)$$

Minimization of $\varepsilon$ generates an adaptation of the correction vector $X_{corr}$, and the set of parameters $\Pi_{corr}$, according to the chosen definition of $\varepsilon$.

$$\mathrm{Min}(\varepsilon^2) \rightarrow X_{corr}(j+1) \text{ and } \Pi_{corr}(j+1) \qquad (3)$$

The new correction vectors may now be used to generate a new vector Xrob.

$$X_{rob}(j+1) = f(X_{nom}, X_{corr}(j+1), \Pi_{nom}, \Pi_{corr}(j+1)) \qquad (4)$$

Note that in this vector some of the coordinates are corrected, and thus in exact agreement with reality. Remaining coordinates are still a nominal representation, but considerably improved by the j+1 touch-ups, by the effected correction of the parameter set.

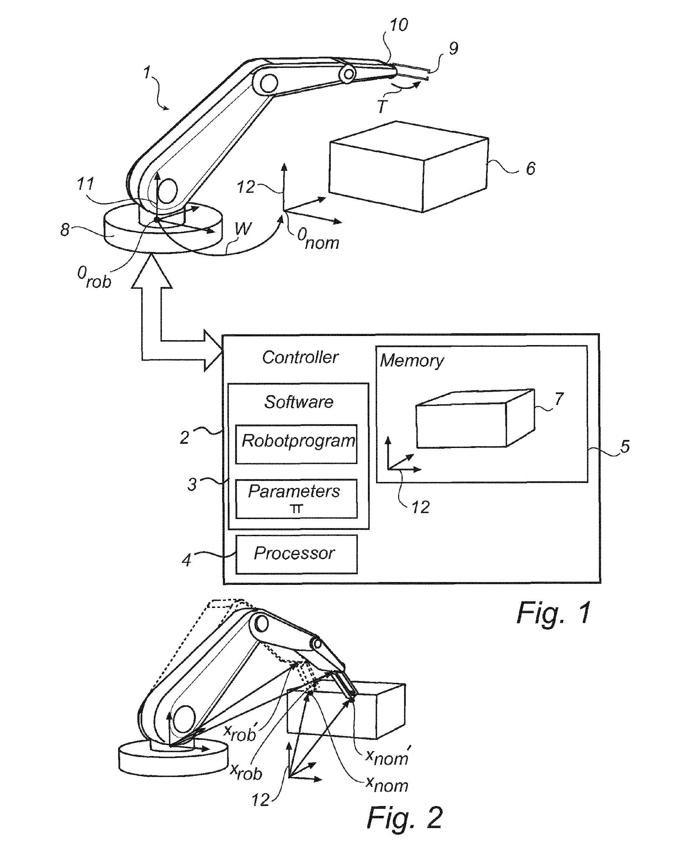

On a more detailed level, the above mathematics is described with reference to a robot installation shown in figure 1. The robot installation comprises a robot 1 (in the illustrated example configured for welding), a controller 2 with suitable software 3, a processor 4 and a memory 5, and a work object 6. In the memory 5 of the controller 2 is stored a nominal description of the robot work in relation to the work object, hereinafter referred to as nominal model 7. The nominal model 7 includes a description 13 of the work object, typically based on a CAD model or the like, and a set if parameters $\Pi$, comprising robot specific relationships as well as relationships between the robot and the work object. The parameter set for example comprises the previously mentioned transform matrices T and O. The software 3 is arranged to transform an arbitrary position in the nominal model to a corresponding position in reality. By "position" is meant a specific location and orientation, i.e. six degrees of freedom are determined. These instructions together form a robot program, which can be down loaded to the robot.

The parameter set $\Pi$ in the controller 2 comprises a nominal transform W, expressing the position (location and orientation) of the robot base 8 in relation to the work object 6. This transform is determined by the position of the object in space, and the requirement on correspondence between this transform and physical installation is reduced when the present invention is used. Because it is in fact the position of the tool center point (TCP) 9 that is relevant, there is a problem with the position of the tool center point in relation to the tool plate, corresponding to that of the position of the work object in relation to the robot base. For this reason, another nominal transform T is introduced, in order to transform a desired nominal position of the TCP 9 (expressed in the coordinate system 12 of the nominal model) to a desired position of the tool plate 10 (expressed in the coordinate system 11 of the robot).

In addition to the transforms W and T, the parameter set $\Pi$ in the controller 2 may include a plurality of robot specific parameters, such as play in various joints, non-linear disturbances, etc. In the following example $\Pi$ = [W, T], and this may generally be used as a starting approximation of the parameter set $\Pi$.

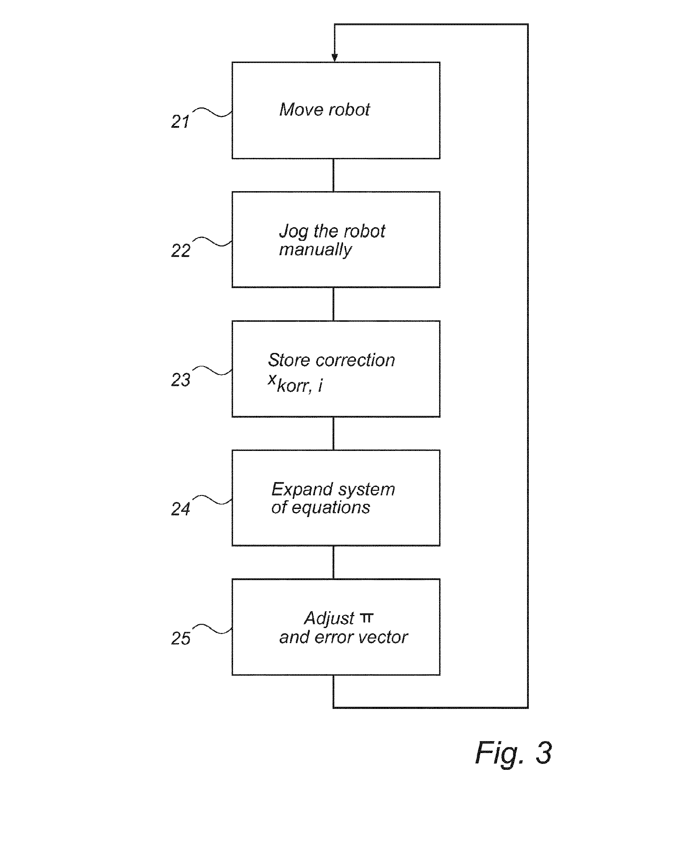

With reference to figures 2 and 3, a touch-up of the robot in figure 1 is described in the following. When the robot 1 by the controller in step 21 (fig 3) is moved to a desired position $P_1$ on the work object, corresponding robot instructions $x_{rob,1}$ are calculated based on the coordinates $x_{nom,1}$ of position $P_1$ in the nominal model, the transforms W and T, and inverse kinematics (a simplified version of equation (1) above). These instructions, however, typically may move the robot slightly off target, due to differences in the reality of the robot and the nominal model. The coordinate $x_{nom,1}$ thus in effect corresponds to a position $P'_1$, slightly offset in relation to the desired position $P_1$. For example, the determination of position of the work object in relation to the robot base may be wrong, so that the transform W is incorrect. Alternatively, the robot tool may have impacted against something, so that the transform T is incorrect.

At this stage, when the robot according to the controller is in position $P_1$, but in reality is in position $P'_1$, the operator performs a manual touch-up, i.e. the operator "jogs" the tool center point of the robot to the correct position $P_1$ (step 22) and stores a change (step 23).

It should be noted that the work object in a typical application is provided with a plurality of visual markings indicating exactly where the robot is intended to perform work, e.g. apply a spot weld. These markings may advantageously be used by the operator to perform the touch-up. The work object itself is thus used to provide feedback for the calibration, and no sensors or other additional equipment is required.

The robot installation, and more particularly the controller 2, is provided with a suitable indicator (a push button or the like) which the operator can use to indicate that the robot has reached the desired position. The controller 2 then registers the new position $x'_1$, and the detected error $x_{corr,1} = x' - x_{nom,1}$. This correction is used (step 24) to define an error according to equation (2), in this example simply:

$$\varepsilon = X_{corr} = x_{corr,1}$$

In step 25, minimization according to equation (3) is performed, with corresponding adjustment of the parameter set $\Pi$. At this stage, the model is thus:

$$\Pi' = [O' \; T'] = [W_{nom}+W_{corr} \; T_{nom}+T_{corr}] \qquad (5)$$

After the first touch-up that is performed, minimization of the error vector $\varepsilon$ will probably lead to $\varepsilon = 0$, as the only detected correction $x_{corr,1}$ can be included in W or T as a pure translation.

The method now returns to step 21 in figure 3, and the robot is moved to the next position P2 in the program and another touch-up is performed (steps 22-23). The system of equations is thus extended by another row (step 24), and the current correction $x_{corr,2}$ is included in the error vector.

In step 25 the error vector is again minimized by adjustment of the parameter set $\Pi$, leading to a new model according to equation (5). The model now has new, updated transform matrices $W_{corr}$ and $T_{corr}$, and errors which cannot be compensated will remain in the error vector $\varepsilon = X_{corr}$.

It is important to note that the remaining error (which is equal to the updated stored corrections, $X_{corr}$) will be used in future operation of the robot, to ensure correct positioning. In prior art, a remaining error is not used for any useful purpose, and typically sets a limitation for the accuracy of the robot.

Note that the error for the first position, that previously probably was zero, may increase after the next touch-up. The parameters in $W_{corr}$ and $T_{corr}$ which previously were able to completely compensate for the error in the first position may after another touch-up show to be suboptimal.

Already after the first adjustment an error reducing effect will be noticeable, by the effect that the corrections of W and T have on the determination of robot coordinates. After 3-4 touch-ups the error may already be insignificant. However, it should be noted that the effect depends on the relationship between successive positions. By weighing certain coefficients of the least square method, errors in relevant directions may be prioritized.

For each touch-up the parameter set $\Pi$ becomes more and more correct. If the nominal model 7 includes an entirely correct description 13 of the object (typically a correct CAD model), and $\Pi$ includes all relevant parameters for modeling of the motions of the robot, it is thus possible to achieve a completely perfect model without remaining errors.

In most applications, despite an adjustment of the parameter set, there typically remains a difference between the nominal coordinates $X_{nom}$ and the actual coordinates X', and this remaining error can be found in the error vector. After touch-ups in several positions, the error vector can be small, and represents such errors which cannot be modeled by parameters in the set $\Pi$.

The parameters may further be divided into calibratable parameters and detectable parameters. For example, "axis 5 backlash" or "axis 5 offset" be categorized as non calibratable, but still be included in an extended identification in step 25. In particular if the remaining error is significant. In this case, if an adjustment of the parameter "axis 5 offset" is shown to reduce the remaining error, this information can be forwarded as a maintenance instruction, e.g. "control axis 5 offset". With this addition, the system becomes an artificial intelligence (AI) error surveillance system. In situations when the robot or the robot tooling is damaged, the calibration according to this embodiment of the present invention will be an important asset. Traditionally, if a tool is bent or there is a slip in axis 5, all programmed positions of the robot must be redefined before production can be resumed. According to this embodiment of the invention, such deviations are compensated more effectively as they are identified in step 25. The parameter set becomes more and more correct, so that an operator does not need to reprogram all positions and all programs. Many programs cannot be corrected until a batch of a rarely produced product is required. With the present invention, after a break-down or a damage, it is possible to quickly resume production as the robot will help to compensate for the damage as soon as the impact of the damage can be identified, e.g. after 3-5 touch-ups. Conventionally, there is also another problem after a repair of damage (e.g. that maintenance staff performs an offset correction of axis 5), as all programmed positions in all programs must be adjusted. With the invention the program can be maintained, and the operation of the robot will be adjusted by adjusting the parameter set.

The above disclosure has been focused on the general principals of the method according to an embodiment of the present invention, and cannot be regarded as a complete description of an entire functional robot system. The person skilled in the art is expected to make the adoptions and additions required to implement the disclosed method in an existing robot installation. In connection with the implementation a number of details may differ from the above description, but this does not indicate departure from the invention according to the appended claims.

On the contrary, the person skilled in the art realizes that the present invention by no means is limited to the preferred embodiments described above. Many modifications and variations are possible within the scope of the appended claims. For example, the robot installation may differ significantly from the one described herein, and the controlled may include several other components and functions in addition to the method according to the invention.

## Claims

**1.** A method for calibration of a robot (1) in relation to a robot installation with at least one work object (6), said method comprising:

modeling the robot installation in a nominal model (7), comprising a description (13) of the work object (6) and a parameter set ($\Pi$) describing physical relationships in the robot and between the robot (1) and the work object (6),
defining a plurality of desired positions (P) as nominal coordinates ($x_{nom}$) in the model (7),
converting said nominal coordinates to robot coordinates ($x_{rob}$),
operating the robot to reach a series of robot positions defined by said robot coordinates, and
when required, manually moving the robot from one of said robot positions to a corresponding desired position (touch-up),
**characterized by**

storing said manual movement (touch-up) in the form of an addition to said nominal model, wherein said addition includes corrections ($x_{corr}$) of said nominal coordinates.

2. The method according to claim 1, further including, after each touch-up, adjusting said parameter set (Π) and adjusting said corrections of said nominal coordinates to the adjusted parameter set.

3. The method according to claim 2, wherein the adjustment of said parameter set is stored in the form of an addition to the parameter set (n).

4. The method according to claim 3, wherein the parameter set (Π) is adjusted by minimizing (step 25) said corrections of said nominal coordinates in the least square sense.

5. The method according to claim 1, wherein the parameter set (Π) includes a coordinate transform (T) between a robot base (8) and a robot tool plate (10).

6. The method according to claim 1, wherein the parameter set (Π) includes a coordinate transform (W) between a robot coordinate system (11) and the nominal coordinate system (12).

7. The method according to claim 1, wherein the parameter set (Π) includes robot related parameters, such as axle offset, angle of fixation, manufacturing tolerances, play or non-linear errors.

8. The method according to any one of the preceding claims,
wherein said addition to the nominal model represents deviations between the nominal model (7) and the work object.

9. A robot installation comprising:

a robot (1) arranged to operate on a work object (6),
a controller (2) including a memory storing a nominal model nominal model (7) including a description (13) of the work object (6) and a parameter set (Π) describing physical relationships in the robot and between the robot (1) and the work object (6),
said controller further comprising a processor programmed to perform the steps of claim 1.

1
10
9
T
6
11
12
8
W
$0_{nom}$
$0_{rob}$
Controller
Memory
Software
7
Robotprogram
2
5
3
Parameters
π
12
4
Processor
$x_{rob}'$
$x_{nom}'$
$x_{rob}$
$x_{nom}$
12

Fig. 1

Fig. 2

21
Move robot
22
Jog the robot
manually
23
Store correction
$x_{korr,\,i}$
24
Expand system
of equations
25
Adjust π
and error vector

Fig. 3

Europäisches
Patentamt
European
Patent Office
Office européen
des brevets

# EUROPEAN SEARCH REPORT

Application Number
EP 13 17 4373

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X<br>Y | EP 0 400 154 A1 (FANUC LTD [JP]) 5 December 1990 (1990-12-05)<br>* page 1, line 1 - page 3, line 1 *<br>* page 5, line 3 - page 8, line 19 * | 1,2,8,9<br>3,4 | INV. B25J9/16 |
| Y | US 2011/046925 A1 (BIDARD CATHERINE [FR] ET AL) 24 February 2011 (2011-02-24)<br>* paragraphs [0032] - [0033], [0058] - [0074] * | 3,4 | |
| A | JP H09 128026 A (MATSUSHITA ELECTRIC IND CO LTD) 16 May 1997 (1997-05-16)<br>* paragraphs [0015] - [0020], [0030], [0031] * | 1-9 | |
| A | ALICI G ET AL: "Laser interferometry based robot position error modelling for kinematic calibration", PROCEEDINGS OF THE 2003 IEEE/RSJ INTERNATIONAL CONFERENCE ON INTELLIGENT ROBOTS AND SYSTEMS. (IROS 2003). LAS VEGAS, NV, OCT. 27 - 31, 2003; [IEEE/RSJ INTERNATIONAL CONFERENCE ON INTELLIGENT ROBOTS AND SYSTEMS], NEW YORK, NY : IEEE, US, vol. 4, 27 October 2003 (2003-10-27), pages 3588-3593, XP010671398, DOI: 10.1109/IROS.2003.1249712 ISBN: 978-0-7803-7860-5<br>* Sections I and IV * | 1-9 | TECHNICAL FIELDS SEARCHED (IPC)<br>B25J<br>G05B |
| X | EP 0 470 257 A1 (FANUC LTD [JP]) 12 February 1992 (1992-02-12)<br>* page 1, line 1 - page 5, line 5 * | 1,2,5-9 | |
| | -/-- | | |

The present search report has been drawn up for all claims

1

| Place of search | Date of completion of the search | Examiner |
|---|---|---|
| The Hague | 13 November 2013 | Prokopiou, Platon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# EUROPEAN SEARCH REPORT

Application Number
EP 13 17 4373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/144809 A1 (PUCHTLER THOMAS [DE]) 31 July 2003 (2003-07-31) * paragraphs [0001] - [0021], [0055] - [0065], [0069] - [0073], [0102] - [0125] * ----- | 1,2,5,8, 9 | |

TECHNICAL FIELDS SEARCHED (IPC)

The present search report has been drawn up for all claims

1

| Place of search | Date of completion of the search | Examiner |
|---|---|---|
| The Hague | 13 November 2013 | Prokopiou, Platon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 13 17 4373

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2013

| Patent document cited in search report | Publication date | Patent family member(s) | Publication date |
|---|---|---|---|
| EP 0400154 A1 | 05-12-1990 | DE 68926292 D1 | 23-05-1996 |
| | | DE 68926292 T2 | 19-09-1996 |
| | | EP 0400154 A1 | 05-12-1990 |
| | | JP H02160487 A | 20-06-1990 |
| | | US 5136223 A | 04-08-1992 |
| | | WO 9006836 A1 | 28-06-1990 |
| US 2011046925 A1 | 24-02-2011 | AT 506146 T | 15-05-2011 |
| | | EP 2158065 A1 | 03-03-2010 |
| | | FR 2917322 A1 | 19-12-2008 |
| | | JP 2010529910 A | 02-09-2010 |
| | | US 2011046925 A1 | 24-02-2011 |
| | | WO 2008155287 A1 | 24-12-2008 |
| JP H09128026 A | 16-05-1997 | NONE | |
| EP 0470257 A1 | 12-02-1992 | EP 0470257 A1 | 12-02-1992 |
| | | JP H03251378 A | 08-11-1991 |
| | | WO 9112935 A1 | 05-09-1991 |
| US 2003144809 A1 | 31-07-2003 | DE 10155430 A1 | 28-05-2003 |
| | | US 2003144809 A1 | 31-07-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4763276 A